(19) Europäisches Patentamt

European Patent Office

Office européen des brevets

(11) **EP 0 911 653 B1**

(12) **EUROPÄISCHE PATENTSCHRIFT**

(45) Veröffentlichungstag und Bekanntmachung des Hinweises auf die Patenterteilung:
**19.07.2006 Patentblatt 2006/29**

(51) Int Cl.:
*G02B 1/02* *(2006.01)*

(21) Anmeldenummer: **98115824.9**

(22) Anmeldetag: **21.08.1998**

(54) **Immersionssystem**

Immersion system

Système d'immersion

(84) Benannte Vertragsstaaten:
**DE FR GB**

(30) Priorität: **05.09.1997 DE 19738985**

(43) Veröffentlichungstag der Anmeldung:
**28.04.1999 Patentblatt 1999/17**

(73) Patentinhaber: **Osram Opto Semiconductors GmbH**
**93049 Regensburg (DE)**

(72) Erfinder: **Späth, Werner**
**83607 Holzkirchen (DE)**

(74) Vertreter: **Epping - Hermann - Fischer**
**Ridlerstrasse 55**
**80339 München (DE)**

(56) Entgegenhaltungen:
**GB-A- 1 491 064       GB-A- 2 181 567**
**US-A- 5 497 359**

**Beschreibung**

Die Erfindung bezieht sich auf ein Immersionssystem für ein magnetooptisches Speichergerät, bei dem eine Linse vorgesehen ist, die im Wesentlichen die Form eines Kugelsegments mit einer ebenen Fläche und einer gekrümmten Fläche aufweist und die aus einem für eine im Speichergerät verwendete elektromagnetische Strahlung der Wellenlänge $\lambda$ durchlässigen Material mit einem gegenüber Luft erhöhten ersten Brechungsindex $n_1$ besteht.

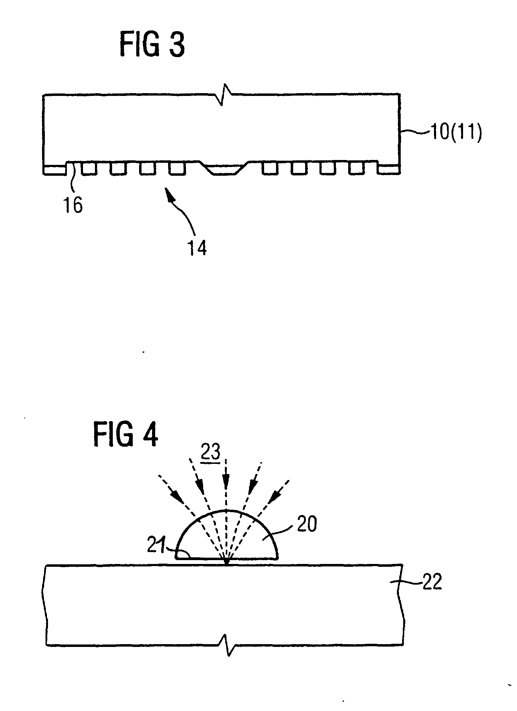

In magnetooptischen Speichergeräten wie Harddisks werden, wie in Figur 4 dargestellt, Immersionssysteme in Form einer einzigen halbkugelförmigen Immersionslinse eingesetzt. Die Immersionslinse 20 besteht beispielsweise aus Glas oder aus transparentem Kunststoff mit einem gegenüber Luft erhöhten Brechungsindex n. Eine in die Immersionslinse 20 eingekoppelte elektromagnetische Strahlung 23, die radial in die Immersionslinse 20 einfällt und in dessen Kugelmittelpunkt konzentriert wird, hat folglich innerhalb der Linse die Wellenlänge $\lambda/n$, wobei $\lambda$ die Wellenlänge in Luft darstellt. Die ebene Fläche 21 der Immersionslinse 20 weist im Betrieb des Speichergeräts zur Oberfläche des Speichermediums 22 einen so geringen Abstand (z. B. ca. 50 nm) auf, daß das Medium zwischen Immersionslinse 20 und Speichermedium 22, im allgemeinen Luft, für die aus der Immersionslinse 20 austretende Strahlung mit der Wellenlänge $\lambda/n$ physikalisch unwirksam ist. Zu diesem Zweck ist dieser Abstand kleiner als $\lambda/n6$. Zwischen der Immersionslinse 20 und dem Speichermedium 22 herrscht folglich physikalischer Kontakt.

Mit der oben beschriebenen Anordnung wird erreicht, dass die Strahlung, z. B. monochromatisches Licht eines Lasers, mit der Wellenlänge $\lambda/n$ (= Wellenlänge innerhalb der Immersionslinse 20) auf das Speichermedium 22 übertragen wird. Der Leuchtfleck auf dem Speichermedium 22 ist folglich gegenüber einem System ohne Immersionslinse 20, bei dem der Leuchtfleck etwa $(\lambda)^2$ groß ist, auf etwa $(\lambda/n)^2$ verkleinert, wodurch eine erhöhte Speicherdichte auf dem Speichermedium 22 erzielt wird.

Bei vorgegebener Wellenlänge $\lambda$ der elektromagnetischen Strahlung 23 kann somit über den Brechungsindex n der Immersionslinse 20 die Speicherdichte beeinflußt werden.

Bei bekannten Immersionslinsen aus Glas (z. B. Quarzglas) oder Kunststoff (z. B. Plexiglas) liegt der Brechungsindex n im Bereich zwischen 1,5 und 2.

Aus der Druckschrift US 5,497,359 ist ein optisches Datenspeichersystem bekannt, bei dem ein Immersionssystem mit einer auf einen Träger aufgebrachten Linse vorgesehen ist.

Der vorliegenden Erfindung liegt die Aufgabe zugrunde, ein Immersionssystem zur Verfügung zu stellen, das eine weiter erhöhte Speicherdichte auf dem Speichermedium zuläßt.

Diese Aufgabe wird durch ein Immersionssystem mit den Merkmalen des Anspruches 1 gelöst. Vorteilhafte Weiterbildungen sind Gegenstand der Unteransprüche 2 bis 7.

Grundsätzlich ist es möglich, als Immersionslinse eine Halbkugel aus einem Halbleitermaterial zu verwenden; das für die im Speichergerät eingesetzte elektromagnetische Strahlung durchlässig ist und einen möglichst hohen Brechungsindex aufweist. Für Strahlung der Wellenlänge $\lambda \geq 400$ nm eignet sich beispielsweise SiC ($n \approx 2,4$) und für $\lambda \geq 550$ nm z. B. GaP ($n \approx 3,2$). Es eignen sich aber auch ternäre oder quaternäre III-V- oder II-VI-Halbleitermaterialien. Für größere Wellenlängen können auch Si, Ge oder GaAs verwendet werden.

Erfindungsgemäß ist bei dem Immersionssystem der eingangs genannten Art vorgesehen, dass der kugelsegmentförmigen Linse in Ausbreitungsrichtung der elektromagnetischen Strahlung eine für diese durchlässige, höherbrechende Schicht nachgeordnet ist, derart, dass die ebene Fläche der Linse und eine erste Hauptfläche der Schicht einander zugewandt sind, und dass die Schicht aus einem Halbleitermaterial mit einem zweiten Brechungsindex $n_2$ besteht, der größer als der erste Brechungsindex des Materials der Linse ist.

Zwischen der Linse und der Schicht aus Halbleiter material befindet sich ein für die Strahlung durchlässiges Trägerplättchen mit einem dritten Brechungsindex $n_3$. Für die Brechungsindices gilt $n_1 \leq n_3 < n_2$.

Die oben genannte Lösung hat den Vorteil, dass keine halbkugelförmigen Linsen aus Halbleitermaterial benötigt werden, deren Herstellung technisch sehr aufwendig ist.

Bei der erfindungsgemäßen Lösung ist vorzugsweise eine technisch einfach herstellbare und damit kostengünstige Linse aus Glas oder Kunststoff verwendet, die auf einem einseitig mit einer Schicht aus höherbrechenden Halbleitermaterial versehenen Trägerplättchen aus Glas oder Kunststoff mit einem dritten Brechungsindex $n_3$ aufliegt und darauf befestigt ist. Die Linse weist physikalischen Kontakt zum Halbleiterplättchen bzw. zum Trägerplättchen auf, so daß der Brechungsindexsprung von der Linse zum entsprechenden Plättchen möglichst klein ist. Je kleiner dieser Brechungsindexsprung ist, umso größer ist die numerische Apertur und folglich der Akzeptanzwinkel des Systems.

Unter physikalischem Kontakt ist im allgemeinen zu verstehen, dass der Abstand kleiner ist als ein Sechstel der Wellenlänge der Strahlung im entsprechenden Medium.

Bei dem einseitig mit einer Schicht aus höherbrechenden Halbleitermaterial versehenen Trägerplättchen aus Glas oder Kunststoff weist die Schicht vorteilhafterweise eine Dicke von $\lambda/2$ oder einem ganzzahligen Vielfachen davon auf. Dadurch werden Beeinträchtigungen der Strahlung durch Resonanzen vermindert. Die Schicht ist beispielsweise mittels Epitaxie, Aufdampfen, Sputtern o.ä. aufgebracht.

Um die dem Speichermedium zugewandte Hauptfläche des Halbleiterplättchens widerstandsfähiger gegenüber mechanischen Einflüssen zu machen, ist diese bevorzugt mit einer Schutzschicht versehen, die z. B. aus SiC, Diamant, $Si_3N_4$, $Al_2O_3$ usw. besteht. Diese Beschichtung ist so dünn, dass sie optisch inaktiv ist, d.h. dass sie die aus der Halbleiterschicht austretenden Strahlung nicht beeinflußt.

Die Höhe $h_L$ der Linse, die Dicke des Trägerplättchens $d_T$ einschließlich der Dicke $d_{HL}$ der höherbrechenden Halbleiterschicht müssen zusammen die "optische" Dicke, d. h. den Krümmungsradius r der gekrümmten Fläche der Linse ergeben. Folgende Bedingung sollte erfüllt sein:

$$r = h_L + (d_T/n_3) + (d_{HL}/n_2)$$

Bei einer vorteilhaften Weiterbildung des Immersionssystems ist an der höherbrechenden Schicht eine induktive Vorrichtung insbesondere eine Spule, vorgesehen. Diese wird bevorzugt mittels mindestens einer auf das Trägerplättchen aufgebrachten Photodiode, die im Betrieb des Speichergeräts z. B. mit einem Laser beleuchtet wird, leistungslos mit Strom versorgt.

Das erfindungsgemäße Immersionssystem wird im Folgenden anhand der Figuren 1 bis 4 näher erläutert. Es zeigen:

Figur 1 eine schematische Darstellung einer Schnittansicht durch ein Immersions system, das nicht Gegenstand der Erfindung ist,

Figur 2 eine schematische Darstellung einer Schnittansicht durch ein Immersionssystem gemäß einem Ausführungsbeispiel der Erfindung,

Figur 3 eine schematische Darstellung einer Schnittansicht eines Ausschnitts eines weiteren Ausführungsbeispiels,

Figur 4 eine schematische Darstellung einer Schnittansicht durch eine Immersionslinse gemäß dem Stand der Technik.

In den Figuren sind gleiche und gleichwirkende Bestandteile der verschiedenen Ausführungsbeispiele jeweils mit denselben Bezugszeichen versehen.

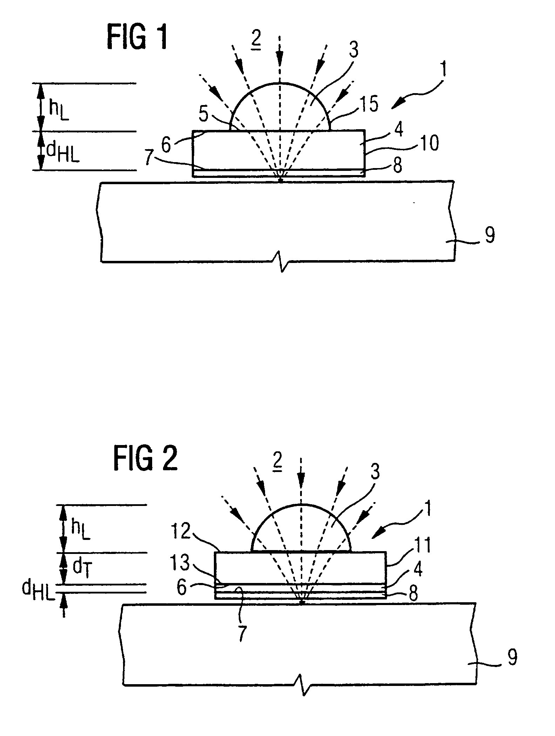

Bei dem Immersionssystem 1 von Figur 1 ist die höherbrechende Schicht 4 ein Halbleiterplättchen 10, auf dessen erster Hauptfläche 6 eine kugelsegmentförmige Linse 3 mit ihrer ebenen Fläche 5 aufliegt. Die Linse 3 besteht beispielsweise aus Glas oder Plexiglas mit einem Brechungsindex $n_1$ von ca. 1,5 und das Halbleiterplättchen 10, je nach Wellenlänge $\lambda$ der durch die gekrümmte Seite 15 der Linse 3 in diese einfallenden elektromagnetischen Strahlung 2, aus einem für diese Wellenlänge $\lambda$ durchlässigen Halbleitermaterial mit einem Brechungsindex $n_2$, der größer als der Brechungsindex

$n_1$ ist (man vergleiche hierzu die weiter oben beispielhaft genannten Halbleitermaterialien für verschiedene Wellenlängenbereiche). Sie ist beispielsweise mittels Klebstoff oder Lot als Verbindungsmittel auf dem Halbleiterplättchen 10 befestigt, wobei die Kleber- bzw. Lotschichtdicke zwischen der Linse 3 und dem Halbleiterplättchen 10 bevorzugt kleiner als 0,1 $\mu$m ist. Die Linse 3 und das Halbleiterplättchen 10 stehen in physikalischem Kontakt, so dass das Verbindungsmittel zwischen Linse 3 und Halbleiterplättchen 10 optisch inaktiv ist. Idealerweise liegt die Linse 3 unmittelbar auf dem Halbleiterplättchen 10 auf.

An einer der ersten Hauptfläche 6 gegenüberliegenden zweiten Hauptfläche 7 des Halbleiterplättchens 10 ist dieses mit einer Schutzschicht 8 versehen. Diese besteht beispielsweise aus SiC, Diamant, SiN, $Al_2O_3$ o.ä. und schützt das Halbleiterplättchen 10 vor mechanischen Beschädigungen. Damit die Schutzschicht 8 für die aus dem Halbleiterplättchen 10 austretende Strahlung optisch inaktiv ist, weist sie eine Dicke $\leq \lambda/6$ auf.

Für die Abmessungen des gesamten Immersionssystems 1 ist Folgendes zu beachten: Die Dicke $d_{HL}$ des Halbleiterplättchens 10 dividiert durch den Brechungsindex $n_2$ des Materials des Halbleiterplättchens 10 und die Höhe $h_L$ der Linse 3 ergeben zusammen den Krümmungsradius r der gekrümmten Fläche 15 der Linse 3, so daß der "Knotenpunkt" der Strahlung im Wesentlichen auf einem dem Halbleiterplättchen 10 in Ausbreitungsrichtung der Strahlung 2 nachgeordneten Speichermedium 9 zu liegen kommt.

Es gilt also:

$$r = h_L + (d_{HL}/n_2).$$

Das Ausführungsbeispiel eines erfindungsgemäßen Immersionssystems von Figur 2 unterscheidet sich von dem vorangehend beschriebenen im Wesentlichen dadurch, dass die Linse 3 auf einer ersten Hauptfläche 12 eines Trägerplättchens 11 der Dicke $d_T$ und mit einem dritten Brechungsindex $n_3$ angeordnet ist, auf dessen der ersten Hauptfläche 12 gegenüberliegenden zweiten Hauptfläche 13 eine Halbleiterschicht 4 mit einem zweiten Brechungsindex $n_2$ aufgebracht ist. Für die Brechungsindices gilt: $n_1 \leq n_3 < n_2$. Die Halbleiterschicht 4 hat eine Dicke $d_{HL}$ von $\lambda/2$ oder eine ganzzahligen Vielfachen von $\lambda/2$. Hinsichtlich der Dicken der einzelnen Komponenten des Immersionssystems gilt:

$$r = h_L + (d_T/n_3) + (d_{HL}/n_2).$$

Die Halbleiterschicht 4 ist beispielsweise epitaktisch oder mittels Sputtern auf das Trägerplättchen 11, das z. B. aus dem gleichen Material besteht wie die Linse 3, aufgebracht. Sie kann zum mechanischen Schutz mit einer Schutzschicht 8 versehen sein.

Das in Fig. 3 gezeigte Ausführungsbeispiel entspricht im Wesentlichen dem vorgenannten Ausführungsbeispie-l. Hier ist lediglich, wie in der Figur 3 gezeigt, an der zweiten Hauptfläche 13 des Trägerplättchens 11 eine ringförmige Ausnehmung 16 vorgesehen, in der eine Spule 14 zur Erzeugung eines Magnetfeldes für die magnetooptische Speicherung angeordnet ist. Die Spule 14 besteht beispielsweise aus einer aufgedampften Metallschicht, die photolitographisch strukturiert ist. Der Strom für die Erzeugung des Magnetfeldes in der Spule 16 kann z. B. mittels einer oder mehreren GaAs-Photodioden, die auf dem Halbleiterplättchen 10 bzw. auf dem Trägerplättchen 11 aufgebracht sind und beispielsweise im Betrieb des Speichergeräts mit einem Laser beleuchtet werden, leitungslos zur Verfügung gestellt werden.

Bezugszeichenliste

| | |
|---|---|
| 1 | Immersionssystem |
| 2 | elektromagnetische Strahlung |
| 3 | Linse |
| 4 | höherbrechende Schicht |
| 5 | ebene Fläche |
| 6 | erste Hauptfläche |
| 7 | zweite Hauptfläche |
| 8 | Schutzschicht |
| 9 | Speichermedium |
| 10 | Halbleiterplättchen |
| 11 | Trägerplättchen |
| 12 | erste Hauptfläche |
| 13 | zweite Hauptfläche |
| 14 | induktive Vorrichtung |
| 15 | gekrümmte Fläche |
| 16 | Ausnehmung |
| | |
| 20 | Immersionslinse |
| 21 | ebene Fläche |
| 22 | Speichermedium |
| 23 | elektromagnetische Strahlung |

**Patentansprüche**

**1.** Immersionssystem (1) für ein magnetooptisches Speichergerät, bei dem eine Linse (3) vorgesehen ist, die im Wesentlichen die Form eines Kugelsegments mit einer ebenen Fläche und einer gekrümmten Fläche aufweist und die aus einem für eine im Speichergerät verwendete elektromagnetische Strahlung (2) der Wellenlänge $\lambda$ durchlässigen Material mit einem gegenüber Luft erhöhten ersten Brechungsindex $n_1$ besteht, wobei die Linse (3) mit ihrer ebenen Fläche (5) auf einer ersten Hauptfläche (12) eines für die Strahlung (2) durchlässigen Trägerplättchens (11) mit einem Brechungsindex $n_3 \geq n1$ aufliegt,

**dadurch gekennzeichnet, dass**
der Linse (3) in Ausbreitungsrichtung der elektromagnetischen Strahlung (2) eine für diese durchlässige höherbrechende Schicht (4) nachgeordnet ist, derart, dass die ebene Fläche (5) der Linse (3) und eine erste Hauptfläche (6) der Schicht (4) einander zugewandt sind und die höherbrechende Schicht (4) auf eine der ersten Hauptfläche (12) des Trägerplättchens (11) gegenüberliegende zweite Hauptfläche (13) des Trägerplättchens (11) aufgebracht ist, wobei die Schicht (4) aus einem für Strahlung (2) der Wellenlänge $\lambda$ durchlässigen Halbleitermaterial mit einem zweiten Brechungsindex $n_2$ besteht, der größer als der erste Brechungsindex $n_1$ des Materials der Linse (3) ist, wobei für die Brechungsindices $n_1 \leq n_3 < n_2$ gilt.

**2.** Immersionssystem nach Anspruch 1, **dadurch gekennzeichnet, dass** je nach Wellenlänge $\lambda$ das Halbleitermaterial aus der Gruppe SiC, GaP, Si, Ge, GaAs stammt.

**3.** Immersionssystem nach einem der Ansprüche 1 oder 2, **dadurch gekennzeichnet, dass** die höherbrechende Schicht (4) an einer der ersten Hauptfläche (6) gegenüberliegenden zweiten Hauptfläche (7) mit einer für Strahlung (2) der Wellenlänge $\lambda$ durchlässigen Schutzschicht (8) versehen ist, die eine größere Härte als das Halbleitermaterial der Schicht (4) aufweist und deren Dicke kleiner als $\lambda/6$ ist.

**4.** Immersionssystem nach einem der Ansprüche 1 bis 3, **dadurch gekennzeichnet, dass**
die höherbrechende Schicht (4) eine Dicke $d_{HL}$ aufweist, das Trägerplättchen (11) eine Dicke $d_T$ aufweist und die Linse (3) eine Höhe $h_L$ aufweist, wobei für den Krümmungsradius r der gekrümmten Oberfläche (15) der Linse (3) gilt:

$$r = h_L + (d_T/n_3) + (d_{HL}/n_2).$$

**5.** Immersionssystem nach einem der Ansprüche 1 bis 4, **dadurch gekennzeichnet, dass**
die höherbrechende Schicht (4) mittels Epitaxie, Aufdampfen oder Sputtern auf das Trägerplättchen (11) aufgebracht ist.

**6.** Immersionssystem nach einem der Ansprüche 1 bis 5,
**dadurch gekennzeichnet, dass**
an der höherbrechenden Schicht (4) eine induktive Vorrichtung (14), insbesondes eine Spule, vorgesehen ist.

**7.** Immersionssystem nach Anspruch 6, **dadurch gekennzeichnet, dass** mindestens eine Photodiode zur Stromversorgung der induktiven Vorrichtung (14) vorgesehen ist.

## Claims

**1.** Immersion system (1) for a magneto-optical storage device in which a lens (3) is provided, which is essentially in the shape of a spherical segment with a planar face and a curved face and which is composed of a material which is transparent to electromagnetic radiation (2) of the wavelength λ, which radiation is used in the storage device, and has a first refractive index $n_1$ which is greater than that of air, the lens (3) resting with its planar face (5) on a first main face (12) of a carrier chip (11) which is transparent to the radiation (2) and has a refractive index $n_3 \geq n_1$, **characterized in that** a layer (4) which is transparent to the electromagnetic radiation and has a higher refractive index is arranged downstream of the lens (3) in the direction of propagation of the electromagnetic radiation (2), such that the planar face (5) of the lens (2) and a first main face (6) of the layer (4) are facing one another, and the layer (4) which has a higher refractive index being applied to a second main face (13) of the carrier chip (11), said second main face (13) lying opposite the first main face (12) of the carrier chip (11) and the layer (4) being composed of a semiconductor material which is transparent to radiation (2) of the wavelength λ and has a second refractive index $n_2$ which is higher than the first refractive index $n_1$ of the material of the lens (3), the following applying for the refractive indices $n_1 \leq n_3 < n_2$.

**2.** Immersion system according to Claim 1, **characterized in that**, depending on the wavelength λ, the semiconductor material is from the group SiC, GaP, Si, Ge, GaAs.

**3.** Immersion system according to one of Claims 1 or 2, **characterized in that** the layer (4) which has a higher refractive index is provided, on a second main face (7) which lies opposite the first main face (6), with a protective layer (8) which is transparent to radiation (2) of the wavelength X, which is harder than the semiconductor material of the layer (4) and whose thickness is smaller than λ/6.

**4.** Immersion system according to one of Claims 1 to 3, **characterized in that** the layer (4) with the higher refractive index has a thickness $d_{HL}$, the carrier chip (11) has a thickness $d_T$ and the lens (3) has a height $h_L$, the following applying to the radius r of curvature of the curved surface (15) of the lens (3):

$$r = h_L + (d_T/n_3) + (d_{HL}/n_2).$$

**5.** Immersion system according to one of Claims 1 to 4, **characterized in that** the layer (4) with the higher refractive index is applied to the carrier chip (11) by means of epitaxy, vapour deposition or sputtering.

**6.** Immersion system according to one of Claims 1 to 5, **characterized in that** an inductive device (14), in particular a coil, is provided on the layer (4) which has a higher refractive index.

**7.** Immersion system according to Claim 6, **characterized in that** at least one photodiode is provided for supplying power to the inductive device (14).

## Revendications

**1.** Système (1) d'immersion pour un appareil de mémoire magnétooptique dans lequel il est prévu une lentille (3) qui a sensiblement la forme d'un segment de sphère ayant une surface plane et une surface courbe et qui est en une matière transparente au rayonnement (2) électromagnétique de longueur d'onde λ utilisé pour un appareil de mémoire et ayant un premier indice $N_1$ de réfraction plus grand que celui de l'air, la lentille (3) s'appliquant par sa surface (5) plane sur une première surface (12) principale d'une plaquette (11) de support transparente au rayonnement (2) et ayant un indice $n_3$ de réfraction $\geq n_1$, **caractérisé en ce que** il est monté en aval de la lentille (3) dans la direction de propagation du rayonnement (2) électromagnétique une couche (4) transparente à ce rayonnement et très réfringente de façon à ce que la surface (5) plane de la lentille (3) et une première surface (6) principale de la couche (4) soient tournées l'une vers l'autre et que la couche (4) très réfringente soit appliquée sur une deuxième surface (13) principale de la plaquette (11) de support, opposée à la première surface (12) principale de la plaquette (11) de support, la couche (4) étant en une matière semi-conductrice transparente aux rayonnements (2) de longueur d'onde λ et ayant un deuxième indice $n_2$ de réfraction qui est plus grand que le premier indice $n_1$ de réfraction de la matière de la lentille (3) en ayant pour les indices de réfraction $n_1 \leq n_3 < n_2$.

**2.** Système d'immersion suivant la revendication 1, **caractérisé en ce que** suivant la longueur d'onde λ la matière semi-conductrice provient du groupe SiC, GaP, Si, Ge, GaAs.

3. Système d'immersion suivant l'une des revendications 1 ou 2, **caractérisé en ce que** la couche (4) très réfringente est munie sur une deuxième surface (7) principale opposée à la première surface (6) principale d'une couche (8) de protection transparente au rayonnement (2) de longueur d'onde λ et ayant une dureté plus grande que celle de la matière semi-conductrice de la couche (4) et dont l'épaisseur est inférieure à λ/6.

4. Système d'immersion suivant l'une des revendications 1 à 3, **caractérisé en ce que** la couche (4) très réfringente a une épaisseur $d_{HL}$, la plaquette (11) de support a une épaisseur $d_T$ et la lentille (3) a une hauteur $h_L$ en ayant pour le rayon r de courbure de la surface (15) courbe de la lentille (3) :

$$r = h_L + (d_T/n_3) + d_{HL}/n_2).$$

5. Système d'immersion suivant l'une des revendications 1 à 4, **caractérisé en ce que** la couche (4) très réfringente est déposée au moyen d'une epitaxie, d'un dépôt en phase vapeur ou d'une pulvérisation cathodique sur la plaquette (11) de support.

6. Système d'immersion suivant l'une des revendications 1 à 5, **caractérisé en ce qu'**il est prévu sur la couche (4) très réfringente un dispositif (14) d'induction notamment une self.

7. Système d'immersion suivant la revendication 6, **caractérisé en ce qu'**il est prévu au moins une photodiode pour alimenter en courant le dispositif (14) d'induction.

## FIG 1

$h_L$

$d_{HL}$

2

3

1

5

15

6

4

7

10

8

9

## FIG 2

$h_L$

$d_T$

$d_{HL}$

2

3

1

12

11

13

4

6

8

7

9

## FIG 3

10(11)

16

14

## FIG 4

23

20

21

22